**Europäisches Patentamt**

**European Patent Office**

**Office européen des brevets**

(11) Veröffentlichungsnummer : **0 335 934 B1**

(12) # EUROPÄISCHE PATENTSCHRIFT

(45) Veröffentlichungstag der Patentschrift :
**27.12.91 Patentblatt 91/52**

(51) Int. Cl.$^5$ : **B01J 37/02, // C22B3/00**

(21) Anmeldenummer : **88908681.5**

(22) Anmeldetag : **08.10.88**

(86) Internationale Anmeldenummer :
**PCT/EP88/00902**

(87) Internationale Veröffentlichungsnummer :
**WO 89/03244 20.04.89 Gazette 89/09**

(54) **VERFAHREN ZUR HERSTELLUNG KATALYTISCH WIRKENDER PULVERFÖRMIGER MISCHPHASEN.**

(30) Priorität : **12.10.87 DE 3734429**

(43) Veröffentlichungstag der Anmeldung :
**11.10.89 Patentblatt 89/41**

(45) Bekanntmachung des Hinweises auf die
Patenterteilung :
**27.12.91 Patentblatt 91/52**

(84) Benannte Vertragsstaaten :
**AT BE DE FR GB IT NL SE**

(56) Entgegenhaltungen :
**DE-C- 899 648**
**FR-A- 1 023 052**
**FR-A- 2 084 406**
**FR-A- 2 089 784**

(73) Patentinhaber : **Kraftanlagen AG.**
**Im Breitspiel 7**
**W-6900 Heidelberg 1 (DE)**

(72) Erfinder : **KOTTER, Michael**
**Frühmessweinberg 22**
**W-7520 Bruchsal 4 (DE)**
Erfinder : **WEYLAND, Friedrich**
**Theodor-Heuss-Stra e 117**
**W-6906 Leimen-St.-Ilgen (DE)**

(74) Vertreter : **Helber, Friedrich G., Dipl.-Ing. et al**
**Zenz, Helber & Hosbach Patentanwälte**
**Scheuergasse 24**
**W-6144 Zwingenberg (DE)**

## Beschreibung

Die Erfindung betrifft ein Verfahren zur Herstellung katalytisch wirkender pulverförmiger Mischphasen aus Vorläufern, die die Elemente der Mischphasen enthalten unter thermischer und mechanischer Behandlung.

Es sind zahlreiche Verfahren zur Darstellung katalytisch wirkender Mischphasen beispielsweise ternärer oder quaternärer Oxide als Grundlage für die Herstellung von Katalysatoren bekannt. Die Herstellungsverfahren sind hierbei abhängig von der Struktur der gewünschten Phase. Zumeist liegen diesen Herstellungsverfahren Feststoffreaktionen zugrunde, bei denen Einzeloxide miteinander vermischt und nachfolgend einer thermischen Behandlung unterzogen werden. Anderen Verfahren werden Fällprozesse zugrunde gelegt, bei denen die Mischphase aus einer Suspension oder Lösung von Vorläufern ausgefällt wird. So wird z.B. in FR-A-2084406 die Fällung von feinverteilten Mischphasen aus wäßrigen Ausgangslösungen mit heißen organischen Lösungsmitteln vorgenommen. Bei diesen Verfahren werden zumeist Metallsalze oder metallorganische Verbindungen einer Fällung unterzogen, getrocknet, zerkleinert, eine Reifung vorgenommen, erneut getrocknet, geformt und zuletzt noch eine Wärmebehandlung angeschlossen. Derartige Verfahren lassen selbst unter besonderer Beachtung der Verfahrensführung bezüglich aufzuwendender Temperaturen und Drücke nicht in allen Fällen reine Mischphasen erzielen. In diesen Fällen sind binäre Oxide als Verunreinigungen in der gewünschten Mischphase eingebunden, wodurch u.a. katalytische Eigenschaften wesentlich herabgesetzt werden. Allen diesen vorbekannten Verfahren liegen jedoch zahlreiche Verfahrensschritte zugrunde, die einen hohen apparativen Aufwand und entsprechend hohe Anlagekosten nach sich ziehen.

Der Erfindung liegt die Aufgabe zugrunde, das Verfahren zur Herstellung katalytisch wirkender pulverförmiger Mischphasen wesentlich zu vereinfachen und unter geringem apparativem Aufwand sowie Anlagekosten vorzugsweise bei atmosphärischem Druck und auf einem herabgesetzten Temperaturniveau die gewünschten Mischphasen unter Ausschluß von Verunreinigungen darzustellen.

Ausgehend von einem Verfahren der eingangs erwähnten Art wird diese Aufgabe erfindungsgemäß dadurch gelöst, daß der in einer Lösung oder Suspension enthaltene Vorläufer auf erwärmte Oberflächen bewegter Wärmeträgerteilchen aufgebracht, auf diesen unter Verdampfung des Lösungsmittels niedergeschlagen und zersetzt wird, die auf den Wärmeträgerteilchen gebildete Mischphase von den Wärmeträgerteilchen entfernt und die feste Mischphase nachfolgend zerkleinert wird. Aufgrund dieser Verfahrensführung ist eine sich ständig erneuernde, benetzbare Wärmeträgeroberfläche auf einem der Verdampfungstemperaturen der Suspension oder Lösung entsprechenden Temperaturniveau zur Verfügung zu stellen, die die einzelnen Stufen des Verfahrens kontinuierlich hintereinanderschalten läßt.

In erfindungsgemäßer Weiterbildung ist vorgesehen, daß die Oberfläche der Wärmeträgerteilchen auf ein die Verdampfungstemperatur seines Lösungsmittels überschreitendes, höheres Temperaturniveau vor Aufgabe des Vorläufers erhitzt wird. Hierdurch gelingt es neben einem Niederschlagen und Zersetzen des Vorläufers zugleich die Kalzinierung der Mischphase unter Verkürzen des Zeitaufwands für die Herstellung der pulverförmigen Mischphase durchzuführen.

Die Wirtschaftlichkeit des Verfahrens zur Herstellung katalytisch wirkender Mischphasen läßt sich dadurch weiter verbessern, daß kontinuierlich der flüchtige Bestandteil des Lösungsmittels oder der Suspension entfernt, der von diesen mitgeführte feste Anteil abgetrennt und dem aus dem Verfahren direkt abgezogenen Anteil der Mischphase zugeleitet wird.

In einer bevorzugten Ausgestaltung der Erfindung wird von den Oberflächen der Wärmeträgerteilchen innerhalb eines Reaktors mit einem im Querschnitt als Kreisring oder diesem angenähert als Vieleck ausgebildeten Mantel laufend die Mischphase durch die Relativbewegung innerhalb des Betts der Wärmeträgerteilchen abgetragen und ferner die Mischphase zugleich vermahlen sowie kontinuierlich oder diskontinuierlich aus dem Kreislauf der Wärmeträgerteilchen abgetrennt. Durch diese Verfahrensführung werden die einzelnen Verfahrensstufen innerhalb eines wandernden Betts der Wärmeträgerteilchen durchgeführt und die Temperatur der Wärmeträgerteilchen läßt sich an das Optimum für die einzelnen Verfahrensstufen anpassen. Sowohl Temperatur-unter- als auch -überschreitungen sind hierdurch zu vermeiden, die Aktivitätsverluste der gebildeten Mischkristalle nach sich ziehen.

Die Kreislaufführung der Wärmeträgerteilchen ist des weiteren besonders vorteilhaft innerhalb eines um eine etwa horizontale Achse drehbar angeordneten Reaktors mit kugelförmigem oder als Vielflächner der Kugelform angenäherten Mantel vorzunehmen, wobei die Wärmeträgerteilchen durch den Kontakt mit dem Reaktormantel laufend nach oben gefördert — durch Schwerkraft wieder zurück nach unten geführt sowie umgewälzt werden.

Besonders vorteilhaft für das Einhalten enger Toleranzen der Temperaturführung ist ein Verfahren, bei dem die Wärmeträgerteilchen innerhalb eines Reaktors mit rohrförmigem Mantel und mit gegen die Horizontale geneigt angeordneter Drehachse durch den Kontakt mit dem Reaktormantel in dessen Drehrichtung nach oben, durch Schwerkraft zurück nach unten und zugleich axial von der Aufgabe des Vorläufers an dem einen zur Abnahme der Mischphase an dem anderen Ende des röhrenförmigen Reaktors weitergefördert sowie hierbei umgeschichtet und ferner die Wärmeträgerteilchen nachfolgend von der Abnahme zumindest eines Teils der Mischphase in den Bereich der Aufgabe des Vorläufers zwangsweise zurückgefördert werden. Unter röhrenförmigem Reaktor ist gleichfalls eine im wesentlichen kegel- bzw. kegelstumpfförmige Ausgestaltung zu verstehen.

In einer hiervon abweichenden Ausgestaltung werden die Wärmeträgerteilchen innerhalb eines Reaktors mit im wesentlichen vertikaler Symmetrieachse unter Relativbewegung des Reaktormantels zu Mitnehmern innerhalb des Reaktors von einer oberen Aufgabe des Vorläufers zu einer unteren Abnahme der Wärmeträgerteilchen im Wesentlichen durch Schwerkraft selbsttätig vertikal nach unten geführt und zugleich umgeschichtet und ferner die Wärmeträgerteilchen nachfolgend von ihrer Abnahme in den Bereich der Aufgabe des Vorläufers zwangsläufig vertikal nach oben unter Schließen ihres Kreislaufs zurückgefördert. Mit dieser Lösung ist unter vertikaler Anordnung der Behälterachse oberhalb der Zuführung der Vorläufer und der Ausbildung der Mischphase ein quasi statisches Bett der Wärmeträgerteilchen als Filter und/oder ein weiteres anzuordnen um Emissionen zu begrenzen.

Die Wiederaufheizung der Wärmeträgerteilchen bzw. die Einstellung ihrer Oberfläche auf das für den einzelnen Verfahrensabschnitt erforderliche Temperaturniveau läßt sich insbesonders dadurch vorteilhaft vornehmen, daß den Wärmeträgerteilchen während ihrer Bewegung innerhalb des Reaktors indirekt über dessen Mantel und/oder die Mitnehmer Wärme zugeführt wird. Der Kugeldurchmesser bzw. das Mischungsverhältnis von Kugeln verschiedener Durchmesser wird hierbei abhängig von der gewünschten Mahlfeinheit und dem Optimum der Temperatur für Niederschlag und Zersetzung desselben bzw. gleichzeitige Kalzinierung gewählt. Durch die sich ausbildende vertikale Schichtung von Kugeln unterschiedlicher Durchmesser wird die Mahlfunktion stärker von der Wärmeträgerfunktion getrennt.

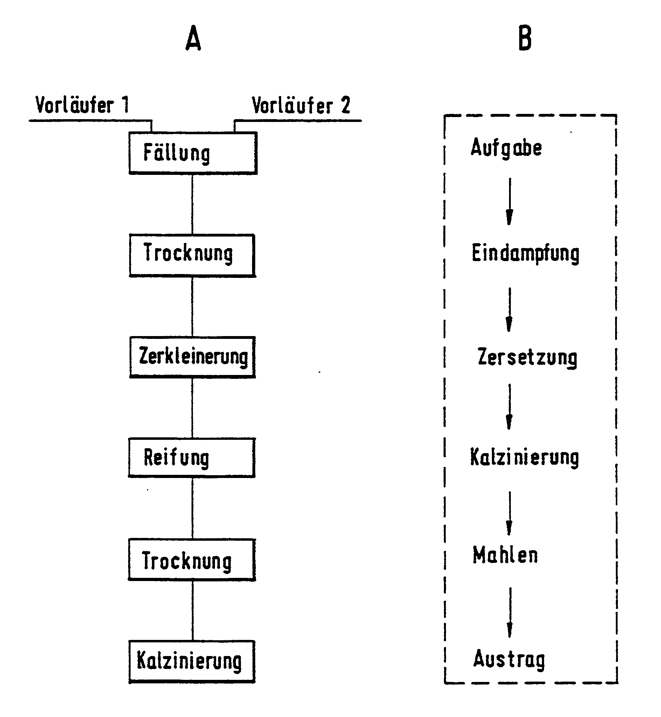

Zur Erläuterung des erfindungsgemäßen Verfahrens ist dieses einem Fällungsverfahren gemäß Stand der Technik in der Zeichnung gegenübergestellt.

In dem Schaltschema A ist ein Fällungsprozeß gemäß Stand der Technik dargestellt, das Catalyse de Contact, le Page, Inst. Francaise du Petrole S. 396 entnommen wurde.

Die Vorläufer 1 und 2 werden hierbei einem Rührwerksbehälter zugeleitet indem die Fällung durchgeführt wird. Nachfolgend wird der erhaltene Niederschlag in Trockenapparaten zunächst vor- und dann nachentwässert. Die auf diese Weise erhaltene Trockensubstanz wird anschließend zerkleinert und nachfolgend einem Reifeprozeß in einer weiteren Prozeßapparatur unterworfen. Dem bei diesem Reifeprozeß erhaltenen Produkt wird schließlich in Trocknern erneut Feuchtigkeit entzogen, bevor in Öfen die Kalzinierung der zuvor erhaltenen Trockensubstanz durchgeführt wird.

Dem Schaltschema B sind die einzelnen Stufen des Verfahrensablaufs gemäß der Erfindung zu entnehmen.

Ausgehend von der Aufgabe der Vorläufer auf die Oberflächen bewegter Wärmeträgerteilchen werden die Vorläufer auf diesen eingedampft sowie zersetzt und nachfolgend die Mischphase kalziniert. Die gebildete katalytisch wirkende Mischphase wird anschließend von den Oberflächen der Wärmeträgerteilchen abgetragen, vermahlen und kontinuierlich oder diskontinuierlich in Anpassung an die gewünschte Mahlfeinheit ausgetragen. Durch die freie Wahl der Verfahrensparameter, insbesondere die Temperaturführung innerhalb des bewegten Schüttbetts, die Umlaufdauer der Schüttgutteilchen und deren Relativgeschwindigkeit lassen sich optimale Flüssigkeitsfilmdicken sowie innerhalb optimaler Niederschlagsgeschwindigkeiten Niederschläge auf den Wärmeträgerteilchen ausbilden, die für die Kernbildungs- und Keimwachstumsgeschwindigkeit der festen Phase gleichermaßen maßgeblich sind. Gleiches gilt für den Temperaturverlauf bei der Kalzinierung und die Mahlfeinheit.

**Ausführungsbeispiel**

In einer Trommel mit einem Durchmesser von 350 mm und einer Tiefe oder Länge von 300 mm wurde eine Kugelfüllung handelsüblicher Mahlkugeln aus Korund in einer Menge von 10 kg und einem Durchmesser der Kugeln von 8-15 mm eingebracht. Die Trommel war gegenüber der Horizontalen leicht geneigt und drehbar gelagert sowie mit einem Antriebsmotor über ein regelbares Getriebe verbunden. Der Vorläufer wurde auf der erhöhten Seite der Trommel über eine Lanze innerhalb einer axial mittig angeordneten Bohrung in der Stirnwand der Trommel auf die Kugelschüttung aufgegeben und die Mischphase in Pulverform auf der gegenüberliegenden Seite unten ausgetragen. Für den Austrag der Mischphase wies die niedriger angeordnete Seite einen Ringspalt zwischen dem Mantel der Trommel und einer zentrischen Scheibe auf. Die Drehzahl der Trommel betrug 4-6 Umdrehungen in der Minute. Die Außenwand der Trommel wurde mit über die Tiefe der Trommel hintereinander geschalteten Gasflächenbrennern beheizt. Die Oberflächentemperatur der Mahlkugeln wurde auf einer Temperatur von 450°C konstant gehalten, wobei die Temperaturabweichungen maximal ± 50°C betrugen. Die Temperaturhaltung erfolgte über die Veränderung der durchgesetzten Menge des Vorläufers.

Beispiel 1

Für eine Herstellung von Kupfermanganat (CuMn$_2$O$_4$) wurde ein Vorläufer aus einer Lösung ein-molarer Kupfernitratlösung und zwei-molarer Mangannitratlösung in die Trommel geführt. Es wurde ein Pulver erhalten, das nach Röntgenstrukturanalyse entsprechend ASTM 11-480 der CuMn$_2$O$_4$-Phase entspricht. In der üblichen Weise wurden die aufgrund der Röntgenstrukturanalyse erhaltenen Glanzwinkel mit den Standards nach ASTM verglichen

Beispiel 2

Für die Herstellung eines Kupferchromits wurde ein Vorläufer aus einer 0,5-molaren Kupfernitrat- und einer ein-molaren Chromnitratlösung in die Trommel eingeleitet.

Es wurde ein Pulver erhalten, das nach Röntgenstrukturanalyse entsprechend ASTM 26-508 der Phase CuCr$_2$O$_4$ entspricht.

Wie zuvor beschrieben, wurden die aufgrund der Röntgenstrukturanalyse erhaltenen Glanzwinkel mit den Standards ASTM verglichen.

Beispiel 3

Für die Herstellung einer Mischphase aus Titan-Vanadiumoxid wurde ein Vorläufer eines Hydrolysats von Titantetrachlorid in Wasser und darin gelöst Ammoniumvanadat hergestellt. Durch Versprühen dieses Vorläufers in einem Sprühtrockner bei 350°C und Nachkalzinieren bei 450°C über eine Stunde erhält man ein ockergelbes bis braungefärbtes Pulver. Die braungelbe Farbe weist auf einen Anteil von freiem Vanadiumpentoxid in der Mischphase hin. Nach Herauslösen des freien Vanadiumpentoxids aus der Mischphase mit 0,5-molarer Oxalsäure erhält man nach Filtration ein dunkelgrünes bis anthrazitfarbenes Pulver. In der abgetrennten Lösung läßt sich die Menge des herausgelösten Vanadiumoxids fotometrisch bestimmen.

Beispiel 4

Für die Herstellung einer Mischphase aus Titan-Vanadiumoxid wurde ein Vorläufer eines Hydrolysats von Titantetrachlorid in Wasser und darin gelöst Ammoniumvanadat in Übereinstimmung mit Beispiel 3 hergestellt. Durch Aufsprühen des Vorläufers auf eine beheizte Trommel, deren Temperatur 450°C betrug, erhielt man ein Pulver, dessen gelbbraune, leicht grünstichige Farbe in Analogie zu Beispiel 3 auf einen Gehalt an freiem Vanadiumpentoxid in der Mischphase hinweist. Das freie Vanadiumoxid wurde wiederum aus der Mischphase mit 0,5-molarer Oxalsäure herausgelöst. Nach Filtration wird erneut ein dunkelgrünes bis anthrazitfarbenes Pulver erhalten. In der abgetrennten Lösung läßt sich die Menge des herausgelösten Vanadiumpentoxids fotometrisch bestimmen.

Beispiel 5

Für die Herstellung einer Mischphase aus Titan-Vanadiumoxid wurde ein Vorläufer eines Hydrolysats von Titantetrachlorid in Wasser und darin gelöst Ammoniumvanadats hergestellt und nachfolgend nach dem erfindungsgemäßen Verfahren auf eine Kugelschüttung innerhalb einer Trommel in Übereinstimmung mit dem den Beispielen 1 und 2 vorangestellten Verfahrensablauf aufgegeben. Es wurde ein dunkelgrünes bis anthrazitfarbenes Pulver erhalten, das eine BET-Oberfläche (Oberflächenmessung nach Brunauer/Emmett und Teller) von 90 m$^2$/g aufweist. Die Farbgebung der erhaltenen Mischphase weist auf einen vernachlässigbar geringen Anteil der störenden Komponente des freien Vanadiumpentoxids in der Mischphase hin. Damit entspricht das Verhältnis von Titan und Vanadium in der Mischphase demjenigen im Vorlaüfer. Für den speziellen Einsatzfall kann dieses Verhältnis durch Wahl der entsprechenden Lösung somit direkt eingestellt werden. Der geringe Anteil an freiem Vanadiumpentoxid in der Mischphase läßt sich wie in den Beispielen 1 und 2 dargelegt bestimmen.

In einer Testapparatur wurden jeweils 1 g der gemäß Beispielen 3-5 erhaltenen Pulver eingewogen und mit einem Gasgemisch von 1000 ppm NO, 1000 ppm NH$_3$ 3% Sauerstoff, Rest N$_2$ überströmt. Der Volumen-strom betrug bei 25°C 13,5 cm$^3$/sec. In Abhängigkeit der Reaktortemperatur wurde ein Umsatz der Reduktion von NO bestimmt.

Tabelle 1

| Probe gemäß Beispiel | NO – Umsatz in % | | | | |
|---|---|---|---|---|---|
| | 200°C | 250°C | 300°C | 350°C | 400°C |
| 3 | 50 | 77 | 86 | 62 | 0 |
| 4 | 63 | 88 | 97 | 99 | 95 |
| 5 | 86 | 99 | 100 | 100 | 100 |

Für die Mischphase wurde in allen Anwendungsbeispielen ein Titanvanadiumatomverhältnis Ti : V = 1 : 0,18 im Vorläufer eingestellt.

Der Gegenüberstellung der vorstehenden Tafel ist für die nach Beispiel 3 und 4 nach den üblichen Verfahren hergestellten Mischphasen im Bereich hoher Temperaturen ein erhblicher Aktivitätsverlust zu entnehmen. Dieser Aktivitätsverlust wird mit der Anwesenheit von freiem $V_2O_5$ in Verbindung gebracht.

In der nachfolgenden Tafel sind für die Beispiele 3 bis 5 die Extinktionen der Lösungen dargestellt, die durch Lösen des freien Vanadiumpentoxids in 0,5-molarer Oxalsäure erhalten wurden.

Tabelle 2

| Probe gemäß Beispiel | 3 | 4 | 5 |
|---|---|---|---|
| Extinktion bei 780 mm | 0,851 | 0,73 | 0,125 |

Die das Vanadiumpentoxid in der Lösung und damit das freie Vanadiumpentoxid in der Mischphase kennzeichnende Extinktion korroliert mit dem Aktivitätsverlust bei hohen Temperaturen gemäß Tabelle 1.

Nach dem erfindungsgemäßen Verfahren können zahlreiche weitere Mischphasen vorteilhaft, nahezu rein, mit anderen Stoffsystemen hergestellt werden. Derartige Mischphasen sind beispielsweise Eisenmolybdat- oder Wismut-Nickel-Eisen-Molybdat-Mischphasen.

Das erhaltene Pulver wird in der üblichen Weise als katalytisch wirkende Verbindung auf Trägerstrukturen aufgebracht. Hierzu werden handelsübliche Bindemittel, vorzugsweise für keramische Massen, verwendet. Das erfindungsgemäße Verfahren bietet des weiteren die Möglichkeit, in Anpassung an diese Weiterverarbeitung die Korngrößenverteilung der hergestellten festen Mischphase durch die Veränderung der Drehzahl, der Kugelgröße und des Füllgrads innerhalb des Reaktors zu wählen.

## Patentansprüche

1. Verfahren zur Herstellung katalytisch wirkender pulverförmiger Mischphasen aus Vorläufern, die die Elemente der Mischphase enthalten, unter thermischer und mechanischer Behandlung, **dadurch gekennzeichnet**, daß der in einer Lösung oder Suspension enthaltene Vorläufer auf erwärmte Oberflächen bewegter Wärmeträgerteilchen aufgebracht, auf diesen unter Verdampfung des Lösungsmittels niedergeschlagen und zersetzt wird, die auf den Wärmeträgerteilchen gebildete Mischphase von den Wärmeträgerteilchen entfernt und die Mischphase nachfolgend zerkleinert wird.

2. Verfahren nach Anspruch 1, dadurch gekennzeichnet, daß der Vorläufer auf über die Verdampfungstemperatur seines Lösungsmittels erhitzten Oberflächen niedergeschlagen und zugleich zersetzt sowie kalziniert wird.

3. Verfahren nach Anspruch 1 oder 2, dadurch gekennzeichnet, daß der flüchtige Bestandteil des Lösungs-

5

mittels oder der Suspension kontinuierlich entfernt, der von diesem mitgeführte feste Anteil abgetrennt und dem aus dem Verfahren direkt abgezogenen Anteil der Mischphase zugeleitet wird.

4. Verfahren nach Anspruch 1, 2 oder 3, dadurch gekennzeichnet, daß von den Oberflächen der Wärmeträgerteilchen innerhalb eines Reaktors mit einem im Querschnitt als Kreisring oder diesem angenähert als Vieleck ausgebildetem Mantel laufend die Mischphase durch ihre Relativbewegung innerhalb ihres Betts abgetragen und ferner die Mischphase zugleich vermahlen sowie kontinuierlich oder diskontinuierlich aus dem Kreislauf der Wärmeträgerteilchen abgetrennt wird.

5. Verfahren nach Anspruch 4, dadurch gekennzeichnet, daß die Wärmeträgerteilchen innerhalb eines um eine etwa horizontale Achse drehbar angeordneten Reaktors mit kugelförmigem oder als Vielflächner der Kugelform angenäherten Mantel durch den Kontakt mit dem Reaktormantel laufend nach oben gefördert und durch Schwerkraft nach unten geführt sowie umgewälzt werden.

6. Verfahren nach Anspruch 4, dadurch gekennzeichnet, daß die Wärmeträgerteilchen innerhalb eines Reaktors mit röhrenförmigem Mantel und mit gegen die Horizontale geneigt angeordneter Drehachse durch den Kontakt mit dem Reaktormantel in dessen Drehrichtung nach oben, durch Schwerkraft nach unten und zugleich axial von der Aufgabe des Vorläufers an dem einen zur Abnahme der Mischphase an dem anderen Ende des röhrenförmigen Reaktors weitergefördert sowie hierbei umgeschichtet werden.

7. Verfahren nach Anspruch 6, dadurch gekennzeichnet, daß die Wärmeträgerteilchen am unteren Ende des Reaktors ausgetragen und nach Abnahme zumindest eines Teils der Mischphase in den Bereich der Aufgabe des Vorläufers zwangsweise zurückgefördert werden.

8. Verfahren nach Anspruch 4, dadurch gekennzeichnet, daß die Wärmeträgerteilchen innerhalb eines Reaktors mit im wesentlichen vertikaler Symmetrieachse unter Relativbewegung des Reaktormantels zu Mitnehmern von einer oberen Aufgabe des Vorläufers zu einer unteren Abnahme der Wärmeträgerteilchen im wesentlichen durch Schwerkraft selbsttätig vertikal nach unten geführt und zugleich umgeschichtet und ferner die Wärmeträgerteilchen nachfolgend von ihrer Abnahme in den Bereich der Aufgabe des Vorläufers zwangsläufig vertikal nach oben zurückgefördert werden.

9. Verfahren nach Anspruch 4 bis 7, dadurch gekennzeichnet, daß den Wärmeträgerteilchen während ihrer Bewegung innerhalb des Reaktors über dessen Mantel Wärme indirekt zugeführt wird.

10. Verfahren nach Anspruch 8, dadurch gekennzeichnet, daß den Wärmeträgerteilchen über die Mitnehmer Wärme indirekt zugeführt wird.

11. Verfahren nach einem oder mehreren der vorhergehenden Ansprüche, dadurch gekennzeichnet, daß Wärmeträgerteilchen mit einem Durchmesser zwischen 3 und 60 mm vorzugsweise zwischen 20 und 30 mm verwendet werden.

12. Verfahren nach Anspruch 11, dadurch gekennzeichnet, daß gleichzeitig Wärmeträgerteilchen unterschiedlicher Fraktionen verwendet werden.

## Claims

1. Method for the production of catalytically active mixed phases in powder form from precursors which contain the elements of the mixed phases, with thermal and mechanical treatment, characterized by the fact that the precursor contained in a solution or suspension is applied to heated surfaces of moving heat carrying particles, precipitated on these with evaporation of the solvent, and dissociated, the mixed phase formed on the heat carrying particles is removed from the heat carrying particles, and the mixed phase is subsequently crushed.

2. Method in accordance with claim 1, characterized in that the precursor is precipitated on surfaces heated above the evaporation temperature of its solvent and at the same time dissociated as well as calcined.

3. Method in accordance with claim 1 or 2, characterized in that the volatile component of the solvent or suspension is continuously removed, the solid matter carried with the latter is separated, and is delivered to the portion of the mixed phase that is withdrawn directly from the process.

4. Method in accordance with claims 1, 2 or 3, characterized in that, from the surfaces of the heat carrying particles within a reactor having a wall configured in cross section as a circle or as a polygon approaching a circle, the mixed phase is continuously removed by its relative movement within its bed, and furthermore the mixed phase is simultaneously ground as well as continuously or discontinuously separated from the circuit of the heat carrying particles.

5. Method in accordance with claim 4, characterized in that the heat carrying particles, within a reactor disposed for rotation about an approximately horizontal axis and having a spherical periphery or a polyhedral periphery approaching a spherical one, are continuously driven upwardly by contact with the reactor wall and carried downward as well as mixed by the force of gravity.

6. Method in accordance with claim 4, characterized in that the heat carrying particles, within a reactor with a tubular periphery and with an axis of rotation disposed at an inclination from the horizontal, are driven upward as well as turned over by contact with the reactor wall in its direction of rotation and downward by the force of gravity and at the same time they are driven axially from the entry of the precursor at the one end to the discharge of the mixed phase at the other end of the tubular reactor.

7. Method in accordance with claim 6, characterized in that the heat carrying particles are taken out at the lower end of the reactor and, after removal of at least a portion of the mixed phase, they are positively returned to the area of the entry of the precursor.

8. Method in accordance with claim 4, characterized in that the heat carrying particles are carried substantially by the force of gravity, and simultaneously stirred, automatically downward vertically within a reactor having a substantially vertical axis of symmetry, with movement of the reactor wall relative to drivers, from an upper entry of the precursor to a lower discharge of the heat carrying particles, and furthermore the heat carrying particles are subsequently returned positively vertically upward from their discharge into the area where the precursor enters.

9. Method in accordance with claim 4 to 7, characterized in that heat is indirectly fed through the wall of the reactor to the heat carrying particles during their movement within the reactor.

10. Method in accordance with claim 8, characterized in that heat is indirectly fed to the heat carrying particles through the drivers.

11. Method in accordance with one or more of the foregoing claims, characterized in that heat carrying particles with a diameter between 3 and 60 mm, preferably between 20 and 30 mm, are used.

12. Method in accordance with claim 11, characterized in that heat carrying particles of different fractions are used simultaneously.

## Revendications

1. Procédé de préparation de phases pulvérulentes en mélange à effet catalytique, à partir de produits de base contenant les éléments de la phase en mélange, avec traitement thermique et mécanique, caractérisé par le fait que le produit de base contenu dans une solution ou une suspension est appliqué sur des surfaces chauffées de particules véhiculant la chaleur, entraînées en mouvement, il est précipité sur celles-ci avec vaporisation du solvant et est décomposé, la phase en mélange formée sur les particules véhiculant la chaleur est éliminée desdites particules et la phase en mélange est ensuite broyée.

2. Procédé selon la revendication 1, caractérisé par le fait que le produit de base est précipité sur des surfaces chauffées au-dessus de la température de vaporisation de son solvant et est en même temps décomposé et calciné.

3. Procédé selon l'une des revendications 1 ou 2, caractérisé par le fait que le composant volatil du solvant ou de la suspension est éliminé en continu, la proportion de partie solide entraînée par celui-ci est séparée et est amenée à la proportion de la phase en mélange évacuée directement du procédé.

4. Procédé selon l'une des revendications 1, 2 ou 3, caractérisé par le fait qu'à partir des surfaces des particules véhiculant la chaleur, à l'intérieur d'un réacteur à enveloppe de section en anneau de cercle ou, rapprochée de celui-ci, en polygone, la phase en mélange est évacuée en continu, de par son mouvement relatif, à l'intérieur de son lit et est en même temps broyée, en outre elle est séparée en continu ou en discontinu du circuit des particules véhiculant la chaleur.

5. Procédé selon la revendication 4, caractérisé par le fait que les particules véhiculant la chaleur, à l'intérieur d'un réacteur monté mobile autour d'un axe sensiblement horizontal, à enveloppe sphérique ou rapprochée de la forme sphérique en tant que polyèdre, sont transportées en continu vers le haut par le contact avec l'enveloppe du réacteur, et sont amenées vers le bas sous l'effet de la pesanteur tout en étant entraînées en circulation.

6. Procédé selon la revendication 4, caractérisé par le fait que les particules véhiculant la chaleur, à l'intérieur d'un réacteur à enveloppe tubulaire et à axe mobile incliné à l'horizontale, sont, par le contact avec l'enveloppe du réacteur, transportées vers le haut dans le sens de rotation de l'enveloppe, et vers le bas sous l'effet de la pesanteur, en étant en même temps amenée axialement, avec regroupement, du point d'admission du produit de base à l'une des extrémités du réacteur tubulaire en point d'évacuation de la phase en mélange à l'autre extrémité.

7. Procédé selon la revendication 6, caractérisé par le fait que les particules véhiculant la chaleur sont évacuées à l'extrémité inférieure du réacteur et, après l'évacuation, une partie au moins de la phase en mélange est ramenée par circulation forcée vers la zone d'admission du produit de base.

8. Procédé selon la revendication 4, caractérisé par le fait que les particules véhiculant la chaleur, à l'inté-

7

rieure d'un réacteur à axe de symétrie sensiblement vertical, avec mouvement relatif de l'enveloppe du réacteur par rapport à des moyens d'entraînement, sont amenées, automatiquement, verticalement vers le bas, essentiellement sous l'effet de la pesanteur, depuis une admission supérieure du produit de base vers une évacuation inférieure des particules véhiculant la chaleur, et sont en même temps regroupées, en outre, subséquemment, les particules véhiculant la chaleur sont ramenées, par circulation forcée, verticalement vers le haut, depuis leur évacuation, à la zone d'admission du produit de base.

9. Procédé selon les revendications 4 à 7, caractérisé par le fait que l'on amène aux particules véhiculant la chaleur indirectement de la chaleur pendant leur mouvement à l'intérieur du réacteur, par l'intermédiaire de l'enveloppe de celui-ci.

10. Procédé selon la revendication 8, caractérisé par le fait que l'on amène aux particules véhiculant la chaleur indirectement de la chaleur par l'intermédiaire des moyens d'entraînement.

11. Procédé selon l'une ou plusieurs des revendications précédentes, caractérisé par le fait que l'on utilise des particules véhiculant la chaleur d'un diamètre compris entre 3 et 60 mm, de préférence entre 20 et 30 mm.

12. Procédé selon la revendication 11, caractérisé par le fait que l'on utilise simultanément des fractions différentes des particules véhiculant la chaleur.

**A**

Vorläufer 1      Vorläufer 2

Fällung

Trocknung

Zerkleinerung

Reifung

Trocknung

Kalzinierung

**B**

Aufgabe

Eindampfung

Zersetzung

Kalzinierung

Mahlen

Austrag